# EUROPEAN PATENT APPLICATION

(11) **EP 1 348 484 A2**
(43) Date of publication of application: **01.10.2003**
(21) Application number: 03007048.6
(22) Date of filing: 27.03.2003
(51) Int. Cl.: B01J 19/24, F28D 9/00, H01M 8/02, H01M 8/06

(54) **Heat Exchanger with Catalyst**

(30) Priority: 27.03.2002 JP 2002088746
(71) Applicant: Calsonic Kansei Corporation, Tokyo 164-8602 (JP)
(72) Inventor: Yoshida, Kazue, Nakano-ku, Tokyo 164-8602 (JP); Yoshida, Hiroyuki, Nakano-ku, Tokyo 164-8602 (JP)
(74) Representative: Grünecker, Kinkeldey, Stockmair & Schwanhäusser Anwaltssozietät

(57) **Abstract**

A heat exchanger with catalyst is provided with a plurality of cooling membrane portions for circulation of cooling water, which are piled up and communicated with each other, first tank portions respectively communicated with first ends of the cooling membrane portions, second tank portions respectively communicated with second ends of the cooling membrane portions, cavities respectively held between the cooling membrane portions, fins disposed in the cavities and an air flow path communicating with the cavities. The first tank portions are communicated with each other and the second tank portions are communicated with each other. The reformed gas flows through the cavities. The catalyst is supported on the respective fins. The air supplied from an outside and the reformed gas are mixed in the cavities and oxidized on the catalyst.

## Description

### BACKGROUND OF THE INVENTION

### FIELD OF THE INVENTION

The present invention relates to a heat exchanger with a catalyst preferably applied to a fuel-cell vehicle.

### DESCRIPTION OF THE RELATED ART

In recent years, developments of fuel-cell vehicles are strongly promoted. For the fuel-cell vehicles, a development of a methanol reformer for effectively gaining hydrogen from methanol is intently promoted.

Because the reformed gas contains unfavorable CO, it is necessary to reduce a concentration thereof to a trouble-free level.

### SUMMARY OF THE INVENTION

A methanol reformer provided with a selective oxidation reactor and oxygen supply means is proposed so as to selectively and effectively oxidize the CO gas. But such a constitution makes the reformer to have a complex structure and a production thereof difficult.

The present invention has been achieved in consideration of the problem and is intended for provision of a heat exchanger with a catalyst in which the oxygen supply means for supplying oxygen from an external apparatus is omitted.

A heat exchanger with a catalyst of the present invention is provided with a plurality of cooling membrane portions for circulation of cooling water, which are piled up and communicated with each other, first tank portions respectively communicated with first ends of the cooling membrane portions, second tank portions respectively communicated with second ends of the cooling membrane portions, cavities respectively held between the cooling membrane portions, fins disposed in the cavities and an air flow path communicating with the cavities . The first tank portions are communicated with each other and the second tank portions are communicated with each other. The reformed gas flows through the cavities. The catalyst is supported on the respective fins. The air supplied from an outside and the reformed gas are mixed in the cavities and oxidized on the catalyst.

Preferably, the air flow path is provided with an air supply portions formed on the first sheet, one or more air outflow portions formed on the second sheets, one or more air inflow portions formed on the third sheets, one or more air injection holes formed on the air inflow portions and the air out flow portions.

More preferably, the air inflow portions and the air outflow portions are disposed in one or more rows in a direction orthogonal to a flowing direction of the first gas on the cooling membrane portions.

More preferably, the air inflow and outflow portions are disposed apart from each other in the rows.

The cooling membrane portions, the first tank portions, the second tank portions, the cavities and the air flow path can be formed by a first sheet and a plurality of second and third sheets being piled up.

### BRIEF DESCRIPTION OF THE DRAWINGS

Fig. 1 is an exploded perspective view of a heat exchanger with a catalyst according to an embodiment of the present invention;
Fig. 2 is a perspective view of the heat exchanger with the catalyst according to the embodiment;
**Fig. 3** is an exploded perspective view of a first sheet of the heat exchanger according to the embodiment;
**Fig. 4** is an exploded perspective view of a second sheet of the air supplier according to the embodiment;
Fig. 5 is a partial cross-sectional view of the heat exchanger according to the embodiment, which is taken along a line V-V of Fig. 2;
Fig. 6 is a partial cross-sectional view of the heat exchanger according to the embodiment, which is taken along a line VI-VI of Fig. 2;
Fig. 7 is an expanded partial cross-sectional view of the heat exchanger showing an air supply portion and the vicinity thereof;
Fig. 8 is a partial cross-sectional view of the heat exchanger according to the embodiment, taken along a plane VIII of Fig. 2;
Fig. 9 is a schematic view illustrating an operation of the heat exchanger according to the embodiment.

### DETAILED DESCRIPTION OF THE PREFERRED EMBODIMENT

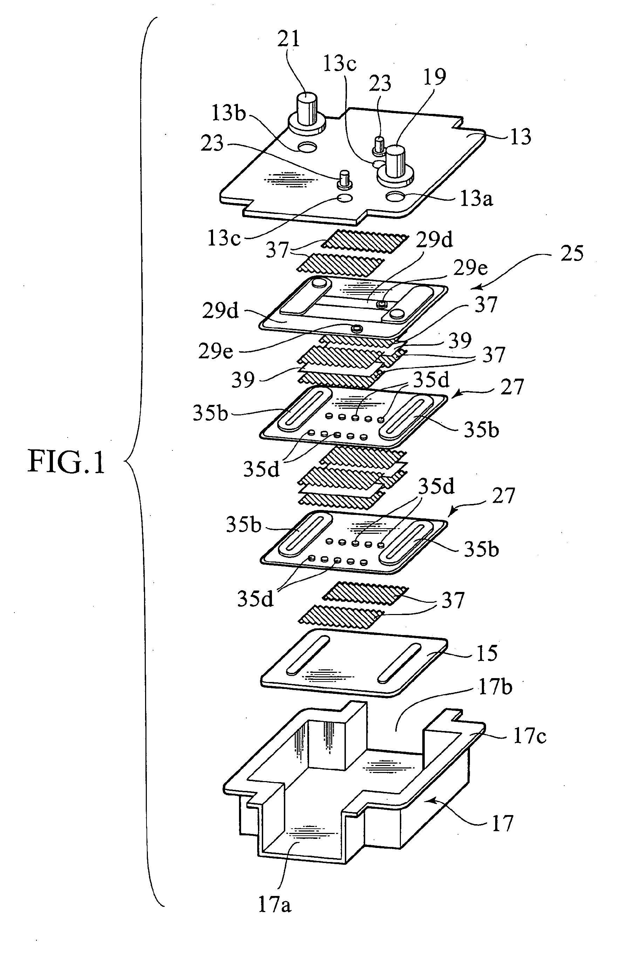

An embodiment of the present invention will be described hereinafter with reference to Figs. 1-9.

A heat exchanger with a catalyst according to the embodiment is applied to a selective oxidation reactor. The heat exchanger with the catalyst is provided with a first side plate 13, a second side plate 15 and a core portion 11 put therebetween.

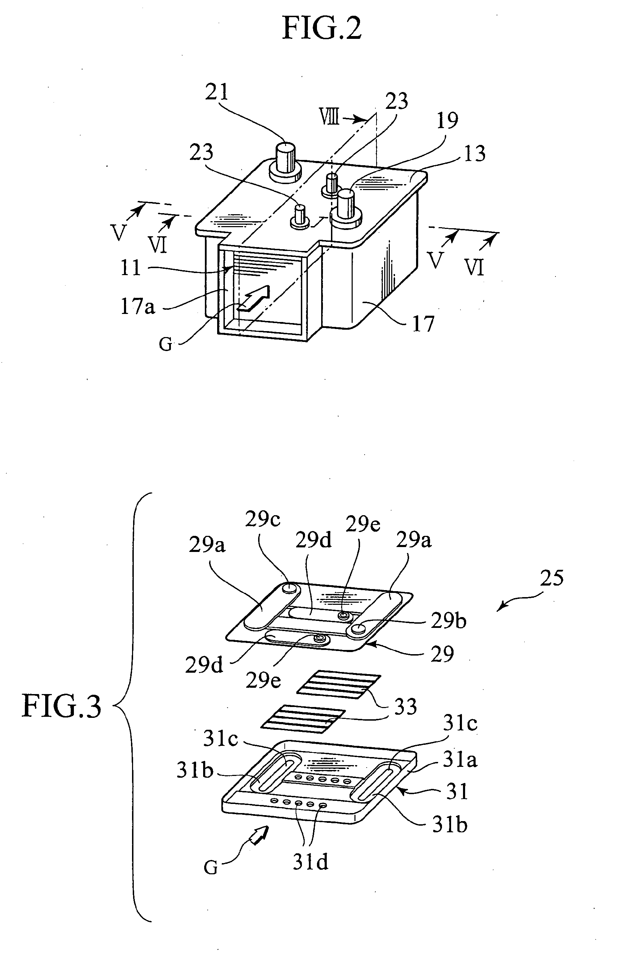

The core portion 11 and the second side plate 15 are housed in a casing 17 shaped as a substantially rectangular box as shown in Fig. 2. The casing 17 is provided with an inflow port 17a and an outflow port 17b for circulation of reformed gas G. A flow direction of the reformed gas G is shown in Fig. 2. An upper end of the casing 17 is provided with a flange portion 17c with which the first side plate 13 is brazed.

The first side plate 13 is provided with an inflow pipe 19 and an outflow pipe 21 for circulating cooling water W. The first side plate 13 is further provided with an air supply pipe 23 for supplying air from an outside thereof.

The core portion 11 is provided with a first cooling membrane 25 and a plurality of second cooling membranes 27. The first cooling membrane 25 and the second cooling membranes 27 are accumulated with each other and cavities 41 are respectively held therebetween so that the reformed gas G can flow through the cavities 41. Two pairs of outer fins 37 sandwiching a pair of partition sheets 39 are disposed in the respective cavities 41. A pair of outer fins 37 are disposed under a lowest one of the second cooling membranes 27. The outer fins 37 are made of metal having high thermal conductivity such as aluminum. The outer fins 37 and the partition sheets 39 are coated by carbon monoxide oxidation catalyst, by which carbon monoxide contained in the reformed gas G is effectively oxidized.

The first cooling membrane 25 is provided with a first sheet member 29, a second sheet member 31 and a plurality of inner fins 33 put therebetween as shown in Fig. 3. The first sheet member 29, the second sheet member 31 and the inner fins 33 are also made of metal having high thermal conductivity such as aluminum.

The second sheet member 31 is provided with a collar portion 31a around a periphery thereof. The collar portion 31a is caulked to closely contact with a periphery of the first sheet member 29 so that the second sheet member 31 is fixed to the first sheet member 29. The first sheet member 29 is provided with a pair of inflated portions 29a projected toward the first side plate 13. One of the inflated portion 29a is provided with an inflow opening 29b, which the inflow pipe 19 is connected to and the cooling water W flows into. The other inflated portion 29a is provided with an outflow opening 29b which communicates with the outflow pipe 21 via a through hole 13b of the first side plate 13.

The first sheet member 29 is further provided with air supply portions 29d extended in a direction orthogonal to the inflated portions 29a. One of the air supply portions 29d is disposed at a side of an air inflow side of the first sheet member 29 and the other air supply portion 29d is disposed at a medium of the first sheet member 29. The air supply portions 29d are respectively provided with inflow holes 29e so as to communicate with the air supply pipes 23.

The second sheet member 31 is provided with a pair of inflated portions 31b projected toward the second side plate 15. The inflated portions 31b are respectively provided with communication holes 31c so as to communicate with an adjacent sheet 27.

The second sheet member 31 is further provided with two rows of plural air outflow portions 31d. The two rows are disposed correspondingly to the air supply portions 29d of the first sheet member 29.

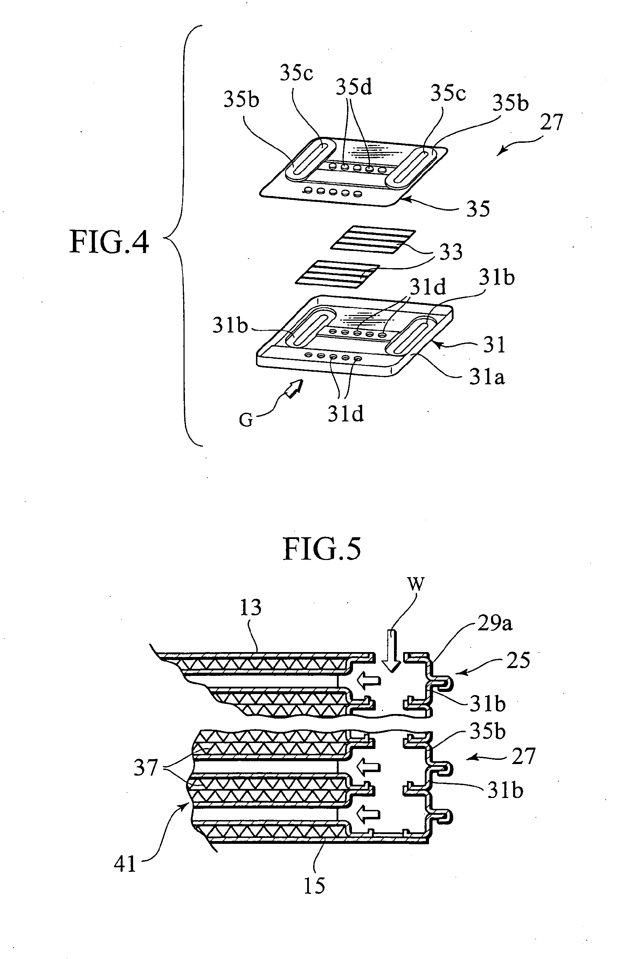

Each of the second cooling membranes 27 is provided with a third sheet member 35, the second sheet member 31 and a plurality of the inner fins 33 put therebetween as shown in Fig. 4. The second sheet member 31 and the inner fins 33 are described above.

The second sheet member 31 is fixed to the third sheet member 35 by caulking the collar portion 31a so as to closely contact with a periphery of the third sheet member 35. The third sheet member 35 is provided with a pair of inflated portions 35b projected toward the first side plate 13. The inflated portions 35b are respectively provided with communication holes 35c so as to communicate with the adjacent first or second cooling membrane 25 or 27.

The third sheet member 35 is further provided with two rows of plural air inflow portions 35d. The two rows are disposed correspondingly to the outflow portions 31d of the adjacent second sheet member 31.

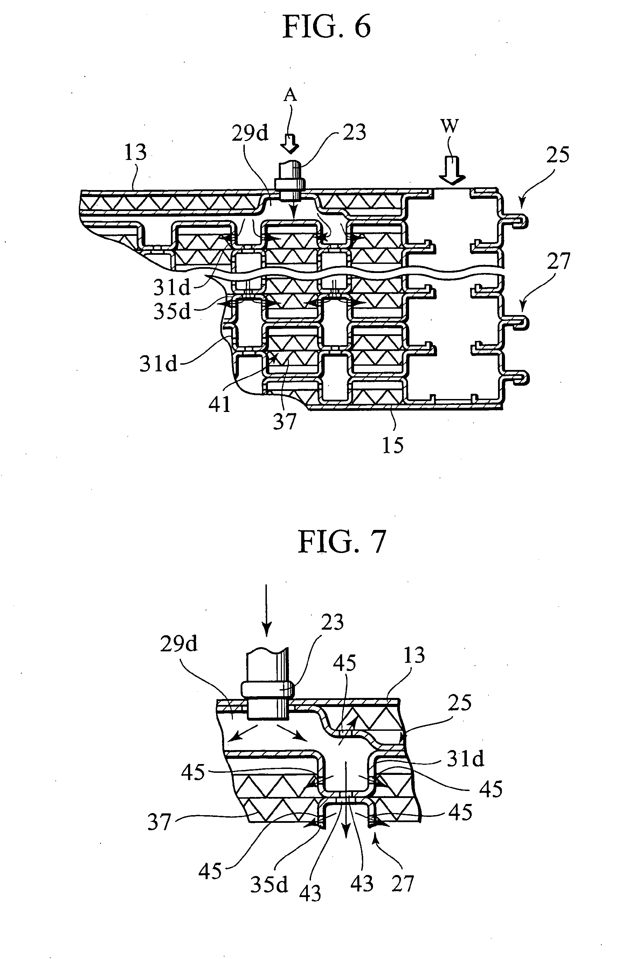

The air outflow portions 31d and the air inflow portions 35d are respectively connected with each other via respective connection holes 43 as shown in Fig. 7. The air outflow portions 31d and the air inflow portions 35d are further provided with plural air injection holes 45 on both sides thereof.

Each of the first cooling membrane 25 and the second cooling membranes 27, excepting the inflated portions 29a, 31b, 35b, the air supply portions 29d, the air inflow portion 35d and the air outflow portion 31d, forms a cooling membrane portion for cooling the reformed gas G and air A supplied thereto. A pair of the inflated portion 29a and the inflated portion 31b and pairs of the inflated portions inflated portion 35b and the inflated portions 31b respectively form tank portions for supplying the cooling water W to the cooling membrane portions.

The cooling water W from an outside flows into the core portion 11 through the inflow pipe 19 and first fills space between the inflated portions 29a, 31b, 35b as shown in Fig. 5. The cooling water W filling the space flows into the first cooling membrane 25 and the second cooling membranes 27. The cooling water W is collected to another space between the other inflated portions 29a, 31b, 35b on the other side and flows out through the outflow pipe 21.

An air flow path for supplying the air A to cavities 41 formed between the respective sheets 25, 27, in which the outer fins 37 are disposed, is formed by the air supply portions 29d, the air outflow portions 31d, the air inflow portions 35d, the air injection holes 45 and the connection holes 43 communicating therewith.

The air A, which is supplied from the air supply pipe 23, first flows into the air supply portions 29d as shown in Fig. 6. The air A further flows through the air outflow portions 31d, 35d of the respective sheets 25, 27 and is supplied via the air injection holes 45 to the cavities 41.

The members above described are installed with each other and housed in a heat treatment furnace so as to be brazed with each other. Next, fluid of the carbon monoxide oxidation catalyst is infused into the cavities 41 so that the outer fins 37 and the partition sheets 39 are coated by the carbon monoxide oxidation catalyst. Then, compressed air is supplied to the air supply portion 29d so as to remove excessive catalyst therein, which has a possibility of filling the air injection holes 45 and such. Thereby the heat exchanger with the catalyst is completed.

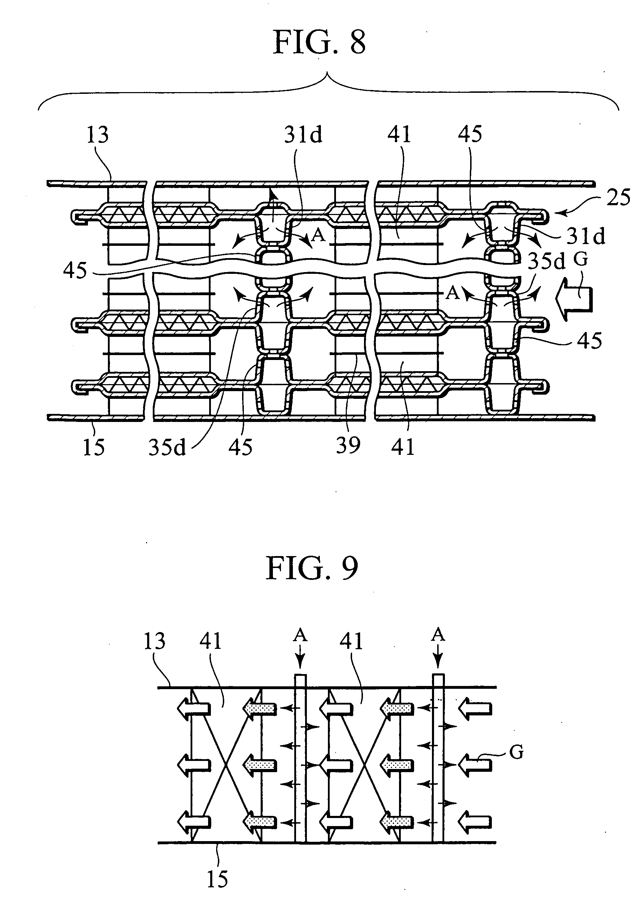

The reformed gas G from a methanol reformer is conducted into the cavities 41 having outer fins 37 as shown in Fig. 8. The conducted reformed gas G is admixed with the air A containing oxygen, which is injected from the air injection holes 45, in the cavities 41. The reformed gas G mixed with the air A chemically react on surfaces of the carbon monoxide oxidation catalyst coated on the outer fins 37 and the partition sheets 39 so that carbon monoxide contained in the reformed gas G is effectively oxidized to carbon dioxide.

The reformed gas G is effectively cooled by heat conduction of the outer fins 37 and the partition sheets 39 to the cooling water W, because the outer fins 37 and the partition sheets 39 are made of metal having high heat conductivity such as aluminum. Though the oxidation of the carbon monoxide is an exothermal reaction, temperature of the reformed gas G is effectively controlled and the oxidation reaction is effectively promoted.

The contents of Japanese Patent Application No. 2002-088746 (filed on March 27, 2002) are incorporated herein by reference in its entirety.

Although the invention has been described above by reference to a certain embodiment of the invention, the invention is not limited to the embodiment described above. Modifications and variations of the embodiment described above will occur to those skilled in the art, in light of the above teachings.

For example, though the embodiment is exemplified as an application to a selective oxidation catalyst, the present invention can be widely applied to heat exchangers with catalyst to which air is supplied from an outside thereof. Further, though the number of the rows of the inflow and outflow portions is limited to two, in the embodiment described above, the number can be one or, three or more. Furthermore, the sheets can be integrally formed from a metal sheet. Furthermore, air tanks for air supply to the sheets are applied instead of the inflated portions.

## Claims

1. A heat exchanger with a catalyst, comprising:
a plurality of cooling membrane portions for circulation of cooling water, being piled up and being communicated with each other;
first tank portions respectively communicated with first ends of the cooling membrane portions, being communicated with each other;
second tank portions respectively communicated with second ends of the cooling membrane portions , being communicated with each other;
cavities respectively held between the cooling membrane portions so that a first gas flows through the cavities;
a plurality of fins comprising catalyst supported thereon, the fins being disposed in the cavities; and
an air flow path communicating with the cavities so as to supply a second gas to the cavities.

2. The heat exchanger with the catalyst according to claim 1, wherein the air flow path comprises an air supply portions formed on the first sheet, one or more air outflow portions formed on the second sheets, one or more air inflow portions formed on the third sheets, one or more air injection holes formed on the air inflow portions and the air out flow portions.

3. The heat exchanger with the catalyst according to claim 1, wherein the air inflow portions and the air outflow portions are disposed in one or more rows in a direction orthogonal to a flowing direction of the first gas on the cooling membrane portions.

4. The heat exchanger with the catalyst according to claim 3, wherein the air inflow and outflow portions are disposed apart from each other in the rows.

5. The heat exchanger with the catalyst according to claim 1, wherein the first gas is reformed gas containing carbon monoxide, the second gas is air and the catalyst is carbon monoxide oxidation catalyst.

6. The heat exchanger with the catalyst according to claim 1, wherein the cooling membrane portions, the first tank portions, the second tank portions, the cavities and the air flow path are formed by a first sheet and a plurality of second and third sheets being piled up.
